# EUROPEAN PATENT APPLICATION

(11) **EP 2 397 516 A1**
(43) Date of publication of application: **21.12.2011**
(21) Application number: 09839861.3
(22) Date of filing: 29.06.2009
(51) Int. Cl.: C08K 13/02, C08L 23/06, C08L 23/12, C08L 27/06, C04B 18/08, C04B 18/16

(54) **ENVIRONMENTALLY-FRIENDLY CERAMIC-PLASTIC COMPOSITE AND THE PREPARATION METHOD THEREOF**

(30) Priority: 13.02.2009 CN 200910014308
(71) Applicant: Zhang, Jianhua, Shandong 250021 (CN); Xu, Yueming, Zhejiang 310009 (CN)
(72) Inventor: Zhang, Jianhua, Shandong 250021 (CN); Xu, Yueming, Zhejiang 310009 (CN)
(74) Representative: Nevant, Marc
(86) International application number: PCT/CN2009/000724
(87) International publication number: WO 2010/091538

(57) **Abstract**

An environment-friendly ceramic-plastic composite and the preparation method thereof. The composite comprises: thermoplastics, bamboo or wood floor, plasticizer, inner and outer lubricant, cross-linking modifier, filling agent, flame retardant, pigment, and ash raw material.

## Description

### Field of the Invention

The present invention belongs to the field of building materials, and especially relates to an environment-friendly type high molecular ceramic-plastic composite and its preparation method.

### Description of the Related Art

With the change of ideas for treating sludge at home and abroad, now they have been gradually unified into the technical idea of sludge incineration. As to how to deal with the solid waste-"buming ash" formed from sludge incineration, there are so many different opinions in the industry. Meanwhile, the disposal of "fly ash" produced by a variety of large, medium and small thermal power plants has not been effectively addressed. The environment has been badly damaged by the dumpage of various ceramic factories and bricks and tiles plants at random. The profiles and plates used in municipal, landscape construction, building materials, home, environmental decoration and related industries fields mostly are wood-plastic composite and log at present. The bearing capacity for environment of this kind of profiles is poor, it is easy to crack, it deforms by warpage and corrosive, and it is unstable in physical and chemical performances. On the other hand, wood-plastic materials or log will consume a large amount of forest resources. The technical method and process idea suggested by the present invention is intended for the recycling utilization of the solid waste in maximum extent, and turns wastes into treasures.

### Summary of the invention

The present invention provides a new type of environment-friendly high molecular composite and its preparation method in terms of the copolymerization mechanism of thermoplastic polymers PE, PP, PVC, which have good flowability and cohesive property, with other modified powdered or granular materials, can make profiles, which are steady in physical and chemical properties, non-toxic, odorless, and resistant to acid, alkali, and high and low temperature.

The program of the present invention is an environment-friendly type high molecular ceramic-plastic composite, which includes thermoplastics, bamboo powders, plasticizing agents, internal and external lubricants, cross-linked modifiers, fillers, flame retardants, pigments, also includes ash materials.

The said ash materials include one or several of sludge ash, fly ash, (waste and scrap) brick and tile ash, ceramic ash and calcium carbonate.

The formula of an environment-friendly type high molecular ceramic-plastic composite consists of the following components by weight: thermoplastics are 10 to 70 percent, ash materials are 10 to 90 percent, bamboo powders are 0 to 40 percent, plasticizing agents are 0.5 to 2 percent, internal and external lubricants are 0.3 to 5 percent, cross-linked modifiers are 0.5 to 5 percent, fillers are 0.1 to 2 percent, flame retardants are 0 to 15 percent, and pigments are moderate.

The thermoplastics are one or two mixed of PVC, PE and PP.

Plasticizing agents include one or several of atactic polypropylene, transparent benzene vinyl-butadiene copolymer and thermoplastic rubber. Plasticizing agents can be used as the selected materials for special high-end materials.

Internal and external lubricants include Poly Zinc Stearate, Calcium Stearate, Paraffin and Ethylene Wax, of which Poly Zinc Stearate and Calcium Stearate are internal lubricants, and Paraffin and Ethylene Wax are external lubricants.

Cross-linked modifiers include aluminum coupling agent and γ-aminopropyltriethoxysilane coupling agent.

Fillers include antioxidant 168, antioxidant 1010, anti-UV agent UV-531, stabilizers. The stabilizers are ACR processing assistant.

Flame retardants are decabromoalkane and antimony silicon trioxide, their contents by weight are respectively: decabromoalkane is 0 to 10 percent, antimony silicon trioxide is 0 to 5 percent. The flame retardants can be used as the selected materials for special high-end materials.

A preparation method of an environment-friendly type high molecular ceramic-plastic composite includes:
(1) to prepare the raw materials according to the above weight percent;
(2) to process the ash materials with screening to get the ash materials which fineness is 200 to 1200;
(3) to mix the ash materials and bamboo powders;
(4) to put the ash materials and bamboo powders into a high-speed mixer to process with dehydration , and make the water content less than 6%;
(5) to put the cross-linked modifiers, external lubricants and plasticizing agents into the high-speed mixer and mix adequately with the ash materials and bamboo powders, the cross-linked modifiers covering the ash materials and bamboo powders to modify, and then mix 3 to 5 minutes at 120°C;
(6) to put the thermoplastics, the antioxidant 168 or 1010, the anti-UV agent UV-531, the stabilizer into the high-speed mixer at the same time to mix adequately, and then mix 5 minutes at 120°C -130°C;
(7) to put the internal lubricants into the high-speed mixer at last, and mix all materials 1 to 5 minutes at 120°C, then the materials are sent into a granulating machine to granulate after unloading thus becoming a high molecular composite, which is stored after packaging.

In step (5), the flame retardants or pigments are put as selected materials in terms of product requirements. In the present invention, bamboo powders can be used or not.

The beneficial effect of the present invention is: the technical program provided by the present invention can save energy; the material is acid-resistant and alkali-resistant; its temperature sensitivity is low, and physical and chemical properties are excellent. Various profiles produced with materials of this invention is stable in physical and chemical properties, high in intension, non-toxic, odorless, resistant to acid, alkali and high and low temperature; it can produce wood texture after surface treatment, the degree of similarity is very high, can replace existing wood-plastic profiles and logs completely or partially, and has secondary processing property of sawing, nailing, cutting and being fastened by bolt. For example: to be made into a variety of plank, floor, door and window frames indoor and outdoor, etc., all kinds of industrial serving tray, warehouse bedding board, all various of packing box, etc. When producing profiles with high molecular composites of this invention, the flow ratio is steady of materials in equipment, and the temperature is easy to control and regulate, the material cannot be carbonized, so can save production costs. The material can be reshaped, so the scrap or waste products can be re-extruded after recycling and broken to manufacture profiles. The various profiles manufactured by the environment-friendly high molecular ceramic-plastic composite have a rather high economic value added, can be widely used in municipal, landscape construction, building materials, home, environment decoration and related industry fields. The social benefit and environmental significance of this invention is very obvious, accords with the national development ideas of "resource-saving and environment-friendly", the present invention can provide a positive contribution for national "energy-saving" and "developing circular economy".

### Detailed description of the invention

The following will further illustrate the program of the present invention through embodiments, but is not limited in them.

### Embodiment 1

An environment-friendly type high molecular ceramic-plastic composite consists of the following components in parts by weight:

| | |
|---|---|
| Thermoplastic PE | 60 |
| Fly ash | 20 |
| Bamboo powder | 20 |
| Aluminate coupling agent | 0.6 |
| Polyethylene wax | 0.45 |
| Zinc stearate | 0.15 |
| Atactic polypropylene | 0.5 |
| Antioxidant 168 | 0.15 |
| Antioxidant 1010 | 0.08 |
| Anti-UV agent UV-531 | 0.15 |
| Decabromoalkane | 3 |
| Antimony silicon trioxide | 2 |
| ACR processing assistant | 0.7 |
| Pigment | moderate |

The preparation method of the environment-friendly type high molecular ceramic-plastic composite includes:
(1) to prepare the raw materials according to the above weight parts;
(2) to process the ash materials with screening to get the ash materials which fineness is 300;
(3) to mix the ash materials and bamboo powders;
(4) to put the ash materials and bamboo powders into a high-speed mixer to process with dehydration, and make the water content less than 4%;
(5) to put the aluminate coupling agent, polyethylene wax and atactic polypropylene into the high-speed mixer and mix adequately with ash materials and bamboo powders, the aluminate coupling agents covering the ash materials and bamboo powders to modify, and then mix 4 minutes at 120°C;
(6) to put the thermoplastics, the antioxidant 168 or 1010, the anti-UV agent UV-531, decabromoalkane, antimony silicon trioxide, the ACR processing assistant and pigment into the high-speed mixer at the same time to mix adequately, and then mix 5 minutes at 120°C-130°C;
(7) to put the zinc stearate into the high-speed mixer at last, and mix all materials 3 minutes at 120°C, then the materials are sent into granulating machine to granulate after unloading thus becoming a high molecular composite, which is stored after packaging.

### Embodiment 2

| | |
|---|---|
| Thermoplastic PVC | 50 |
| Ceramic ash | 50 |
| Aluminate coupling agent | 0.8 |
| Polyethylene wax | 0.75 |
| Zinc stearate | 0.35 |
| Atactic polypropylene | 0.8 |
| Antioxidant 168 | 0.14 |
| Antioxidant 1010 | 0.07 |
| Anti-UV agent UV-531 | 0.13 |
| Decabromoalkane | 2 |
| Antimony silicon trioxide | 1 |
| ACR processing assistant | 0.6 |
| Pigment | moderate |

The preparation method of the environment-friendly type high molecular ceramic-plastic composite includes:
(1) to prepare the raw materials according to the above weight parts;
(2) to process the ash materials with screening to get the ash materials which fineness is 200 to 1200;
(3) to put the ash materials and bamboo powders into a high-speed mixer to process with dehydration, and make the water content less than 3%;
(4) to put the aluminate coupling agent, polyethylene waxs and atactic polypropylene into the high-speed mixer and mix adequately with ash materials and bamboo powders, the aluminate coupling agents covering the ash materials and bamboo powders to modify, and then mix 3 to 5 minutes at 120°C;
(5) to put the thermoplastics, the antioxidant 168 or 1010, the anti-UV agent UV-531, decabromoalkane, antimony silicon trioxide, the ACR processing assistant and pigment into the high-speed mixer at the same time to mix adequately , and then mix 5 minutes at 120°C-130°C;
(6) to put the internal lubricants into the high-speed mixer at last, and mix all materials 1 to 5 minutes at 120°C, then the materials are sent into granulating machine to granulate after unloading becoming a high molecular composite, which is stored after packaging.

### Embodiment 3

| | |
|---|---|
| Thermoplastic PP | 40 |
| Brick and tile ash and fly ash | 60 |
| Aluminate coupling agent | 1 |
| Polyethylene wax | 0.9 |
| Zinc stearate | 0.45 |
| Thermoplastic rubber | 0.9 |
| Antioxidant 168 | 0.12 |
| Antioxidant 1010 | 0.06 |
| Anti-UV agent UV-531 | 0.12 |
| Decabromoalkane | 1.6 |
| Antimony silicon trioxide | 0.7 |
| ACR processing assistant | 0.5 |
| Pigment | moderate |

The preparation method of the environment-friendly type high molecular ceramic-plastic composite is the same as for embodiment 2.

### Embodiment 4

| | |
|---|---|
| Thermoplastic PE and thermoplastic PP | 30 |
| Sewage ash | 70 |
| Aluminate coupling agent | 1.3 |
| Polyethylene wax | 1.2 |
| Zinc stearate | 0.75 |
| Thermoplastic rubber | 1.2 |
| Antioxidant 168 | 0.1 |
| Antioxidant 1010 | 0.05 |
| Anti-UV agent UV-531 | 0.1 |
| Decabromoalkane | 1.4 |
| Antimony silicon trioxide | 0.6 |
| ACR processing assistant | 0.4 |
| Pigment | moderate |

The preparation method of the environment-friendly type high molecular ceramic-plastic composite is the same as for embodiment 2.

### Embodiment 5

| | |
|---|---|
| Thermoplastic PVC | 20 |
| Calcium carbonate and ceramic ash | 80 |
| Aluminate coupling agent | 1.6 |
| Polyethylene wax | 1.5 |
| Zinc stearate | 1.0 |
| Thermoplastic rubber | 1.5 |
| Antioxidant 168 | 0.08 |
| Antioxidant 1010 | 0.04 |
| Anti-UV agent UV-531 | 0.08 |
| Decabromoalkane | 1.3 |
| Antimony silicon trioxide | 0.5 |
| ACR processing assistant | 0.3 |
| Pigment | moderate |

The preparation method of the environment-friendly type high molecular ceramic-plastic composite is the same as for embodiment 2.

## Claims

1. An environment-friendly type high molecular ceramic-plastic composite comprising thermoplastics, bamboo powders, plasticizing agents, internal and external lubricants, cross-linked modifiers, fillers, flame retardants and pigments, wherein it also comprises ash materials.

2. The environment-friendly type high molecular ceramic-plastic composite of claim 1, wherein the said ash materials include one or several of sludge ash, fly ash, brick and tile ash, ceramic ash and calcium carbonate.

3. The environment-friendly type high molecular ceramic-plastic composite of claim 1, which consists of the following components by weight: thermoplastics are 10 to 70 percent, ash materials are 10 to 90 percent, bamboo powders are 0 to 40 percent, plasticizing agents are 0.5 to 2 percent, internal and external lubricants are 0.3 to 5 percent, cross-linked modifiers are 0.5 to 5 percent, fillers are 0.1 to 2 percent, flame retardants are 0 to 15 percent, and pigments are moderate.

4. The environment-friendly type high molecular ceramic-plastic composite of claim 3, wherein the said thermoplastics is one or two mixed of PVC, PE and PP.

5. The environment-friendly type high molecular ceramic-plastic composite of claim 3, wherein the said plasticizing agents include one or several of atactic polypropylene, transparent benzene vinyl-butadiene copolymer and thermoplastic rubber.

6. The environment-friendly type high molecular ceramic-plastic composite of claim 3, wherein the said internal and external lubricants include zinc stearate, calcium stearate, polyethylene wax and paraffin.

7. The environment-friendly type high molecular ceramic-plastic composite of claim 3, wherein the said cross-linked modifiers include aluminum coupling agent and γ-aminopropyltriethoxysilane coupling agent.

8. The environment-friendly type high molecular ceramic-plastic composite of claim 3, wherein the said fillers include: antioxidant 168, antioxidant 1010, anti-UV agent UV-531 and stabilizers.

9. The environment-friendly type high molecular ceramic-plastic composite of claim 8, wherein the said stabilizer is ACR processing assistant.

10. The environment-friendly type high molecular ceramic-plastic composite of claim 3, wherein the said flame retardants are decabromoalkane and antimony silicon trioxide, their contents by weight are respectively: decabromoalkane is 0 to 10 percent, antimony silicon trioxide is 0 to 5 percent.

11. A preparation method of the environment-friendly high molecular ceramic-plastic composite of claim 1, which comprises:
(8) preparing the raw materials according to the above weight percent;
(9) processing the ash materials with screening to get the ash materials which fineness is 200 to 1200;
(10) mixing the ash materials and bamboo powders;
(11) putting the ash materials and bamboo powders into a high-speed mixer to process with dehydration, and make the water content less than 6%;
(12) putting the cross-linked modifiers, external lubricants and plasticizing agents into the high-speed mixer and mix adequately with the ash materials and bamboo powders, the cross-linked modifiers covering the ash materials and bamboo powders to modify, and then mixing 3 to 5 minutes at 120°C;
(13) putting the thermoplastics, the antioxidant 168 or 1010, the anti-UV agent UV-531, the stabilizer into the high-speed mixer at the same time to mix adequately, and then mix 5 minutes at 120°C-130°C;
(14) putting the internal lubricants into the high-speed mixer at last, and mix all materials 1 to 5 minutes at 120°C, then sending the materials into a granulating machine to granulate after unloading thus becoming a high molecular composite, which is stored after packaging.

12. The preparation method of environment-friendly type high molecular ceramic-plastic composite of claim 11, wherein in step (5), the flame retardants or pigments are put as selected materials in terms of product requirements.
